# EUROPÄISCHE PATENTSCHRIFT

(11) **EP 1 508 279 B1**
(45) Veröffentlichungstag und Bekanntmachung des Hinweises auf die Patenterteilung: **08.06.2011**
(21) Anmeldenummer: 04018323.8
(22) Anmeldetag: 03.08.2004
(51) Int. Cl.: A23G 3/06, A23G 3/02, A23G 7/00, A22C 11/02, A21C 5/00

(54) **Verfahren und Vorrichtung zur Herstellung eines Produkts aus Süsswarenmasse**
Method and device for manufacturing a product from candy mass
Procédé et dispositif pour la préparation d'un produit à partir d'une masse de confiserie

(30) Priorität: 20.08.2003 DE 10338217
(43) Veröffentlichungstag der Anmeldung: 23.02.2005
(73) Patentinhaber: Sollich KG, 32105 Bad Salzuflen (DE)
(72) Erfinder: Sollich, Thomas, 32689 Kalletal (DE)
(74) Vertreter: Rehberg Hüppe + Partner

(56) Entgegenhaltungen:
- WO-A-00/03603
- DE-A- 3 727 596
- DE-A- 4 438 718
- DE-A- 10 035 461
- DE-C- 638 792
- US-A- 5 458 894

## Beschreibung

Die Erfindung betrifft ein Verfahren zur kontinuierlichen Herstellung eines Produkts aus essbarer Masse, insbesondere Süßwarenmasse, indem aus der Masse ein Strang mit festgelegtem Querschnitt geformt wird, der Strang auf einem Transportband abgelegt und abgefördert wird und der Strang in einzelne Produkte zumindest quergeschnitten wird. Es wird auch eine Vorrichtung zur kontinuierlichen Herstellung eines Produkts aus essbarer Masse, insbesondere Süßwarenmasse, mit einem den Querschnitt der Masse bestimmenden Strangformer, einem angetriebenen Transportband zum Ablegen und Abfordern des von dem Strangformer gebildeten Strangs und zumindest einem Querschneider zum Unterteilen des Strangs in einzelne Produkte aufgezeigt.

Das Verfahren und die Vorrichtung dienen zur Herstellung von Produkten aus essbarer Masse, also insbesondere aus Süßwarenmasse und anderen Nahrungsmitteln. Die Massen sind flüssig bis pastös, also jedenfalls verformbar. Aus der verformbaren Masse wird zunächst ein Strang gebildet. Der Strang kann als Teppich oder Band über die Arbeitsbreite der Vorrichtung durchgehend erzeugt werden. Ein solcher durchgehender Strang wird dann längs und quer aufgeschnitten, so dass die einzelnen Produkte entstehen. Dabei handelt es sich In der Regel um Riegelware, also einzelne Produktstücke, die in der Regel im Horizontalschnitt rechteckig begrenzt sind, aber auch letztlich quadratischen Querschnitt aufweisen. In Ausnahmefällen können auch Produkte mit im Horizontalschnitt kreisrunder oder abgerundeter Gestalt hergestellt werden, wenn das Längs- und Querschneiden durch eine Art Stanzvorgang erfolgt. Es ist aber auch möglich, den Strang von vornherein in Form mehrere separater Einzelstränge zu erzeugen, so dass auf das Längsschneiden verzichtet werden kann.

Der Strang bzw. die Einzelstränge werden nach der Strangbildung, die über einen Strangformer erfolgt, auf einem angetriebenen Transportband abgelegt. Sowohl die Bildung des Strangs wie auch die Abförderung des Strangs auf dem Transportband werden kontinuierlich durchgeführt. Auf diese Weise können Produkte aus Nougat-, Karamell-, Fudge- oder ähnlichen Massen, die auch feste Stücke, z. B. gehackte Mandeln, Nüsse und dergleichen, enthalten, hergestellt werden. Ein wesentliches Anwendungsgebiet ist auch die Herstellung von Müsliriegeln, die als wesentliche Bestandteile Cerealien enthalten. Die Massen können auch belüftet sein oder komprimierbare Bestandteile enthalten.

### STAND DER TECHNIK

Ein Verfahren und eine Vorrichtung der eingangs beschriebenen Art sind bekannt. Es wird ein Strangformereingesetzt, der zwei angetriebene Walzen aufweist, die auf Abstand zueinander angeordnet sind und damit zwischen sich einen Spalt bilden, in den die formbare Masse eingezogen wird. Die Masse tritt dann in Form eines Teppichs mit einer der Spaltweite entsprechenden Höhe aus dem Strangformer aus und wird so kontinuierlich auf ein angetriebenes Transportband abgelegt. Die Bildungsgeschiwindigkeit des Strangs oder Teppichs am Austritt des Strangformers entspricht der Geschwindigkeit, mit der das Transportband angetrieben wird. Entsprechend der Spaltweite ergibt sich die Höhe des Teppichs und damit letztendlich die gewünschte Produkthöhe eines z. B. hergestellten Riegels.

Bei der Herstollung solcher Riegelware kommt es auf die Einhaltung eines festgelegten Produktgewichts an. Einerseits darf das auf der Verpackung des Produkts angegebene Gewicht nicht unterschritten werden. Andererseits ist man bei der Herstellung solcher Riegelware schon aus Kostenersparnisgründen bestrebt, das angegebene Gewicht möglichst wenig zu überschreiten. Je nach der Art der Masse ist die Einhaltung eines Soll-Gewichts des einzelnen Produkts - auch in zulässigen Grenzen - mehr oder weniger problematisch. Bei der Verarbeitung von flüssigen bis pastösen Massen lässt sich ein Soll-Gewicht des Produkts meist noch relativ gut einhalten, weil solche Massen nach der Formung des Strangs sofort eine glatte Oberfläche einnehmen und ansonsten auch wenig komprimlerbar sind. Bei der Herstellung von Riegeln aus oder unter Verwendung von Cerealien wird oft eine Mischung aus trockenen Cerealien und einer flüssigen bis teigigen Bindermasse eingesetzt. Aufgrund der grobkörnigen Struktur der Cerealien hat der stranggeformte Teppich keine geschlossen ebene Oberfläche. Die Höhe des Strangs ist örtlich unterschiedlich, insbesondere dann, wenn die Masse komprimierbare Bestandteile enthält und sich nach der Strangformung die Höhe des Strangs noch verändern kann.

Die Problematik beim Bilden eines Strangs aus einer solchen formbaren Masse oder auch in Form von Einzelsträngen besteht in den auftretenden Gewichtsschwankungen am endlosen Strang. Trotz z. B. konstanter Höhe des Strangs kann es auch zu Schwankungen in der Dichte der Masse kommen, so dass das Soll-Gewicht des Produkts beeinträchtigt wird. Eine ungleichmäßige Befüllung des dem Strangformer vorgeschalteten Trichters mit der Folge unterschiedlicher Druckverhältnisse im Spalt zwischen den beiden Walzen, Ungenauigkeiten beim Einhalten der Rezeptur und der Zusammensetzung der Masse, Dichteschwankungen in der Rohstoffzusammensetzung usw. können sich negativ auf die Einhaltung eines konstanten Produktgewichts auswirken. Auch unterschiedliche Temperaturen können die Eigenschaften der formbaren flüssigen bis pastösen Massen so verändern, dass Gewichtsschwankungen am fertigen Produkt auftreten.

Um dennoch die angestrebten Soll-Gewichte bei der Herstellung solcher Produkte einzuhalten, ist es bekannt, stichprobenartig einen Teil des gebildeten Strangs auszuschneiden, zu wiegen und mit dem angestrebten Soll-Gewicht des Strangs pro Flächeneinheit zu vergleichen. Es ist auch möglich, eine repräsentative Anzahl fertiger Produkte am Ende der Vorrichtung zu entnehmen und zu wiegen. In beiden Fällen lässt sich berechnen, welche Abweichung zum Soll-Gewicht des Produkts vorliegt. Je nach dem, ob das Soll-Gewicht über- oder unterschritten worden ist, wird die Spalthöhe des Strangsformers mit zwei Walzen manuell verändert bzw. nachgestellt, um auf diese Art und Weise die Gewichte der Produkte zu regulieren. Die stichprobenartige Gewichtskontrolle sowie das manuelle Nachjustieren des Strangformers sind arbeitsintensiv und ungenau. Die erzielbare Wirkung hängt von der Sorgfalt ab. Da die Herstellung der Produkte kontinuierlich weitergeht, lassen sich entsprechende Mengen an hergestellten Produkten mit Über- oder Untergewicht nicht vermeiden. Allenfalls ist es möglich, untergewichtige Produkte am Ende der Herstellung auszusondern. Dies geschieht innerhalb einer automatischen Zuführung des Produkts zu entsprechenden Verpackungsmaschinen. Die Erzeugung untergewichtiger Ausschussprodukte ist entsprechend teuer.

Aus der DE 44 38 718 A1 ist eine Vorrichtung zum Vorschieben und Formen eines Massestrangs in Verbindung mit einer Verpackungsmaschine bekannt, bei der ein Massestrang, insbesondere für die Herstellung von Welchkaramellen mit vorgegebenem, also festgelegtem Querschnitt gebildet wird. Dieser Massestrang wird nach der Bildung abgefördert und mit Hilfe einer Schneidvorrichtung in einzelne Produkte quergeschnitten. Die auf diese Weise von dem Strang abgeteilten Produkte werden verpackt und entweder einzeln oder als zusammengeführte größere Gebinde gewogen. Die von der Waage ermittelten Ist-Werte werden einem Regelkreis, beispielsweise einer speicherprogrammierbaren Steuerung, zugeführt, die die Ist-Werte des Gewichts der einzelnen Stücke mit einem gespeicherten Soll-Wert vergleicht und je nach Übereinstimmung oder Differenz einen Vorschubantrieb mit einem oder mehreren Walzenpaaren steuert. Diese Vonschubwalzenpaare kalibrieren den Strang auf einer Vorschubbahn vor der Schneideinrichtung. Die Vorschubwalzenpaare verändern nicht nur den Querschnitt des Strangs, sondern auch das Ist-Flächen- oder Metergewicht des Strangs nach der Strang bildung und vor der Schneidvorrichtung. Das Querschneiden des Strangs in die Produkte wird von den Signalen der Waage nicht beeinflusst.

Aus der DE 37 27 596 A1 ist eine Anordnung zum kontinuierlichen Erzeugen eines Teigstrangs bekannt, bei dem der Teigstrang durch ein Walzengerüst mit einem allseitig geschlossenen Walzspalt gefördert und dadurch ein Teilstrang hoher Homogenität und mit konstantem Querschnitt erzeugt wird. Auch hier erfolgt das Umformen des Strangs in Produkte mit einem Querschneider. Nach dem Querschneiden werden die Produkte einzeln über eine Waage geführt und gewogen. Das ermittelte Produktgewicht wird mit einem Soll-Produktgewicht verglichen. Durch Ansteuerung des Querschneiders wird versucht, das vorgegebene Soll-Gewicht der Produkte einzuhalten bzw. zu korrigieren.

### AUFGABE DER ERFINDUNG

Der Erfindung liegt die Aufgabe zugrunde, ein Verfahren und eine Vorrichtung der eingangs beschriebenen Art aufzuzeigen, mit denen es möglich ist, das Soll-Gewicht der hergestellten Produkte genauer als bisher einzuhalten und den Anteil übergewichtiger Produkte und untergewichtiger Ausschussware zu reduzieren.

### LÖSUNG

Die Aufgabe der Erfindung wird erfindungsgemäß mit den Merkmalen der unabhängigen Patentansprüche 1 und 5 gelöst.

### BESCHREIBUNG DER ERFINDUNG

Bei dem neuen Verfahren wird der Strang auf dem Transportband liegend gewogen. Dabei wird schrittwelse getaktet in relativ kurzzeitigen Abständen das Flächengewicht des Strangs, sei es als durchgehender Masseteppich oder in Form von Einzelsträngen, ermittelt. Dies kann unter Mitverwiegung eines Teils des Transportbandes oder eines gesamten separaten Abschnittes des Transportbandes geschehen. Auf jeden Fall wird ein Signal gebildet, welches dem Gewicht des kontinuierlich abgeförderten Strangs proportional ist. Das ermittelte Gewicht des Strangs wird mit einem Soll-Gewicht des Strangs verglichen, wobei durch Differenzbildung die Abweichung ermittelt wird. Diese Abweichung ist wiederum bestimmend für die Veränderung des Gewichts des Strangs, beispielsweise durch Verstellung der Spaltweite des Strangformers. Es ist aber auch möglich, das aktuelle Stranggewicht in ein aktuelles Produktgewicht umzurechnen und den Vergleich mit einem Soll-Gewicht des Produkts durchzuführen. Die dabei durch Differenzbildung ermittelte Abweichung des Produktgewichts ist bestimmend für die Veränderung des Produkts. Dies kann beispielsweise dadurch erreicht werden, dass die Zeitspannen, zwischen denen zwei aufeinanderfolgende Querschnitte am Ende des Transportbandes am Strang durchgeführt werden, verändert werden, wodurch durch Variation der Produktlänge eine Annäherung an das Soll-Gewicht des Produkts vorgenommen wird.

Besonders sinnvoll ist es, wenn das Gewicht des Strangs durch Veränderung des Querschnitts ausgeregelt wird. Es findet also hier eine Regelung statt, d. h. es wird ein geschlossener Regelkreis gebildet, in welchem das ermittelte aktuelle Gewicht des Strangs mit dem Soll-Gewicht des Strangs verglichen und die Abwelchung des Ergebnisses als Stellgröße für die Veränderung des Querschnitts des Strangs genutzt wird. Die Veränderung des Querschnitts des Strangs kann auf verschiedene Art und Weise erfolgen und richtet sich nach der Ausbildung des Strangformers Im Einzelnen. Wenn der Strang mit Hilfe von zwei einen Austrittsspalt bildenden Walzen geformt wird, wird die Veränderung des Querschnitts durch Veränderung der Höhe des Austrittsspalts erreicht. Wenn der Strang beispielsweise mit Hilfe eines Extruders mit Austrittsdüse fester Gestalt gebildet wird, besteht die Möglichkeit, die Fördergeschwindigkeit und damit die Bildungsgeschwindigkeft des Strangs vor dem Ablegen auf dem Transportband zu beeinflussen, so dass der Strang bei konstanter Antriebsgeschwindigkeit des Transportbandes geringfügig gedehnt oder gedrückt wird, wodurch das Flächengewicht des Strangs geregelt und damit dem Soll-Gewicht des Strangs angenähert wird.

So ist es möglich, dass das Gewicht des Strangs durch Veränderung des Verhältnisses der Bildungsgeschwindigkeit und der Abfördergeschwindigkeit des Strangs ausgeregelt wird. Insoweit ist es auch möglich, die Bildungsgeschwindigkeit konstant zu halten und die Abfördergeschwindigkeit regelnd zu verändem.

Weiterhin ist es möglich, Ober einen Steuervorgang zusätzlich zu einem Regelvorgang eine Annäherung an das Soll-Gewicht des Produkts zu erreichen. Dies geschieht beispielsweise dadurch, dass das Gewicht des Produkts durch Veränderung der Zeitspanne zwischen zwei aufeinanderfolgenden Querschnitten des Strangs ausgesteuert wird. Diese Maßnahme ist insbesondere sinnvoll mit einem vorangehenden Regelvorgang.

Wesentlicher Bestandteil der Vorrichtung ist eine Waage, die im Bereich des Transportbandes angeordnet ist. Die Waage ist in der Regel unterhalb des oberen Trums des Transportbandes angeordnet. Eine andere Möglichkeit besteht darin, das Transportband in mehrere geteilte Bänder aufzuteilen und die Wiegung an einem solchen Teil des Transportbandes durchzuführen. Die Waage wird als getaktete Bandwaage in mehr oder weniger kurzen zeitlichen Abständen betrieben, indem eine Folge von Gewichtssignalen, die für das Stranggewicht repräsentativ sind, erzeugt wird.

Von Bedeutung ist weiterhin eine Einrichtung zur Veränderung des Gewichts des Strangs und/oder des Produkts. Es können auch mehrere solcher Einrichtungen in Kombination angewendet werden. Die Einrichtungen sind als Regel- oder Steuereinrichtungen ausgebildet, in denen ein Vergleich der durch die Waage erzeugten Signale mit einstellbaren Sollsignalen erfolgt und durch jeweilige Differenzbildung ein Regel- oder Steuersignal in Form der Abweichung ermittelt wird. Dieses die Abweichung wiedergebende Signal wird dann der Einrichtung zur Veränderung des Gewichts des Strangs und/oder des Produkts zugeführt, also in der Regel an eine Stelleinrichtung am Strangformer, am Querschneider oder einem sonstigen Element, mit dem das aktuelle Gewicht des Strangs und/oder des Produkts verändert werden kann. So kann der Strangformer einen den Querschnitt des Strangs bestimmenden Austrittsspalt aufweisen und die Einrichtung zur Veränderung des Gewichts des Strangs kann als Stelleinrichtung zur Veränderung des Austrittsspalts ausgebildet sein. Dabei kann der Strangformer entweder aus zwei Walzen bestehen. In einer anderen Möglichkeit besitzt der Strangformer lediglich eine Walze und ein dieser Walze zugeordnetes Wehr, die auch hier einen veränderlichen Austrittsspalt miteinander bilden. Schließlich kann die Einrichtung zur Veränderung des Gewichts des Strangs und/oder des Produkts als Regel- oder Steue:-einrichtung zur Veränderung der Bildungsgeschwindigkeit des Strangs im oder am Austritt des Strangformers, der Antriebsgeschwindigkeit des Transportbandes und/oder der Taktrate des Querschneiders ausgebildet sein.

Schließlich besteht noch die Möglichkeit, im Bereich des Transportbandes eine oder mehrere dem Strangformer nachgeordnete Kalibrierwalzen für den Strang vorzusehen. Diese Kalibrierwalzen haben kelnen Einfluss auf das Soll-Gewicht der Produkte. Es ist jedoch möglich, mit ihrer Anwendung den Querschnitt des Strangs und damit den Querschnitt der Produkte zu beeinflussen, beispielsweise die Höhe der Produkte zu vergleichmäßigen oder an eine Sollhöhe anzupassen.

### KURZBESCHREIBUNG DER FIGUREN

Im Folgenden wird die Erfindung anhand in den Figuren dargestellter bevorzugter Ausführungsbeispiele weiter erläutert und beschrieben.
**Fig. 1** zeigt eine schematisierte Seitenansicht einer ersten Ausführungsform der Vorrichtung.
**Fig. 2** zeigt eine schematisierte Seitenansicht einer zweiten Ausführungsform der Vorrichtung.
**Fig. 3** zeigt eine schematisierte Draufsicht auf eine dritte Ausführungsform.

### FIGURENBESCHREIBUNG

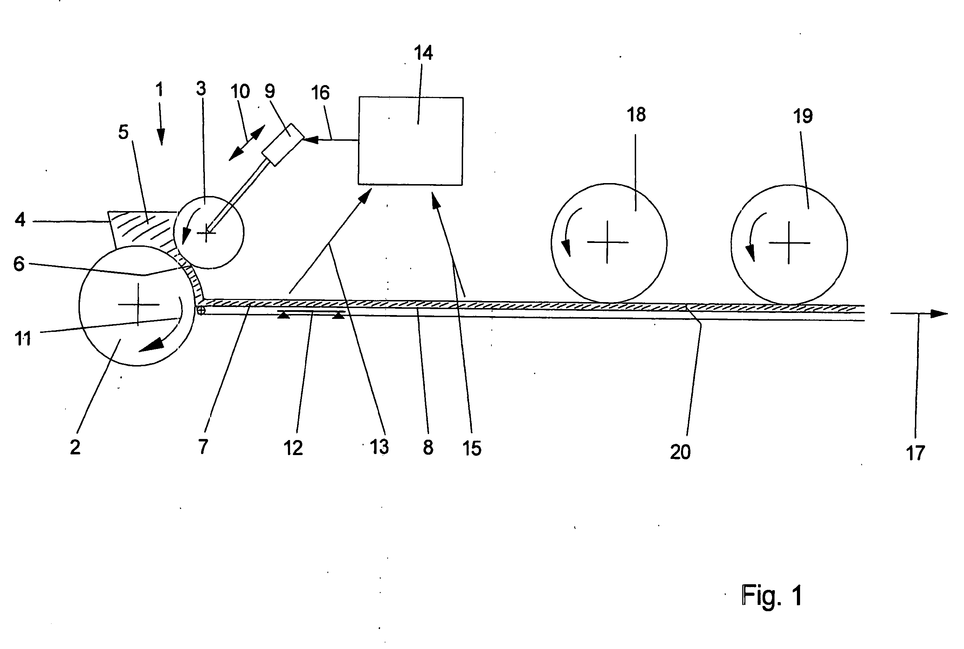

Fig. 1 zeigt eine Vorrichtung, die zur Durchführung des Verfahrens geeignet ist, mit ihren für die Erfindung wesentlichen Bestandteilen. Die Vorrichtung weist einen Strangformer 1 auf. Der Strangformer 1 besteht im Wesentlichen aus zwei Walzen 2 und 3, denen ein Trichter 4 zur Aufnahme der zu verformenden Masse 5 vorgeschaltet ist. Die Masse wird durch eine hier nicht dargestellte Einrichtung kontinuierlich In den Trichter 4 aufgegeben bzw. nachgefüllt. Die beiden Walzen 2 und 3 bilden miteinander einen Austrittsspalt 6, mit dessen Hilfe die Masse 5 aus dem Trichter 4 eingezogen und in den vorgegebenen Querschnitt verformt wird, so dass hier ein Strang 7 gebildet wird, der auf einem dem Strangformer 1 nachgeschalteten angetriebenen Transportband 8 abgelegt wird. Zur Veränderung der Weite bzw. Höhe des Austrittsspalts 6 ist eine Stelleinrichtung 9 vorgesehen, mit deren Hilfe die Spaltweite zwischen den Walzen 2 und 3 in Richtung eines Doppelpfeils 10 veränderbar ist. Die Stelleinrichtung 9 kann auch der anderen Walze 2 zugeordnet sein, da es hinsichtlich der Spaltweite nur auf die Relatiwerstellung der Walzen 2 und 3 zueinander ankommt. Es ist auch möglich, z. B. die Walze 3 um die Stelleinrichturig 9 herum zu verschwenken, um eine besonders feinfühlige Veränderung der Weite des Austrittsspalts 6 zu erzielen.

Zumindest die Walze 2 wird gemäß Pfeil 11 angetrieben. Die Stelleinrichtung 9 kann bei konstanter oder auch bei veränderbarer Weite des Austrittsspalts 6 auch dem Antrieb der Walzen 2 und/oder 3 zugeordnet sein. Durch die Antriebsgeschwindigkeit der Walzen 2, 3 wird die Bildungsgeschwindigkeit festgelegt bzw. bestimmt, mit der die Masse 5 durch den Austrittsspalt 6 hindurchtritt. Damit wird der Anfangsquerschnitt des Strangs 7 festgelegt bzw. bestimmt. In der Regel stimmt diese Antriebsgeschwindigkeit der Walzen 2 und 3 und damit die Bildungsgeschwlndigkeft mit der Antriebsgeschwindigkeit des Transportbandes 8 überein. Je nach der Konsistenz und den übrigen Eigenschaften, beispielsweise der Temperatur der Masse, wird so auf die Bildung des Querschnitts des Strangs 7 im Bereich des Strangsformers 1 in Verbindung mit dem Transportband 8 Einfluss genommen. Die Bildungsgeschwindigkeit im Bereich des Strangformers 1 muss jedoch nicht unbedingt mit der Antriebsgeschwindigkeit des Transportbandes 8 übereinstimmen. Auch hier können Unterschiede zwischen diesen beiden Geschwindigkeiten je nach der Art der Masse sinnvoll oder sogar erforderlich sein, um einen gleichmäßigen Strang 7 mit dem dazu vorgesehenen, geringfügig gedehnten oder gedrückten Querschnitt auf dem Transportband 8 abzulegen.

Im Bereich des Transportbandes 8 ist eine Waage 12 angeordnet, die vorzugsweise getaktet betrieben wird und mit deren Hilfe das aktuelle Ist-Gewicht des Strangs 7 als Flächen- oder Metergewicht pro Zeiteinheit ermittelt wird. Aus dieser Ermittlung des Massestroms des Strangs 7 wird eine Folge von Signalen gebildet, die über eine elektrische Leitung 13 einer Regeleinrichtung 14 zugeführt werden. Von dem hier nicht näher dargestellten Antrieb des Transportbandes 8 wird über eine Leitung 15 ein der Antriebsgeschwindigkeit des Transportbandes 8 proportionales Signal an die Regeleinrichtung 14 abgegeben. Die Regeleinrichtung 14 kann mit einem Eingabeteil versehen sein, mit dessen Hilfe sich ein Soll-Gewicht das Strangs 7 oder ein Soll-Gewicht des letztendlich hergestellten Produkts eingeben lässt. Die Regeleinrichtung 14 weist einen Rechen-und Steuerteil auf, der zur Ermittlung einer Abweichung der Ist-Größen von den Soll-Größen ausgebildet ist. Aus der Abweichung wird ein Regelsignal gebildet, welches über eine Leitung 16 der Stelleinrichtung 9 zugeführt wird. Damit wird eine geschlossene Regelschleife gebildet. Damit lässt sich in engen Grenzen das Soll-Gewicht des Strangs 7 auf dem Transportband 8 einhalten, welches proportional zu dem Soll-Gewicht des letztendlich hergestellten Produkts festgelegt Ist.

Im Bereich des Transportbandes 8, auf welchem der Strang 7 gemäß Pfeil 17 abgefördert wird, kann eine oder mehrere Kalibrierwalzen 18, 19 angeordnet sein, die in der Höhe ver- bzw. einstellbar angeordnet sind. Den Kalibrierwalzen 18, 19 können nicht näher dargestellte Gegendruckwalzen unter dem oberen Trum des Transportbandes 8 zugeordnet sein. Mit Hilfe dieser Kalibrierwalzen 18, 19 ist es möglich, auf den Querschnitt 20 des Strangs 7 Einfluss zu nehmen. Damit wird die Form des Querschnitts 20 beeinflusst, nicht aber das Gewicht des Strangs 7.

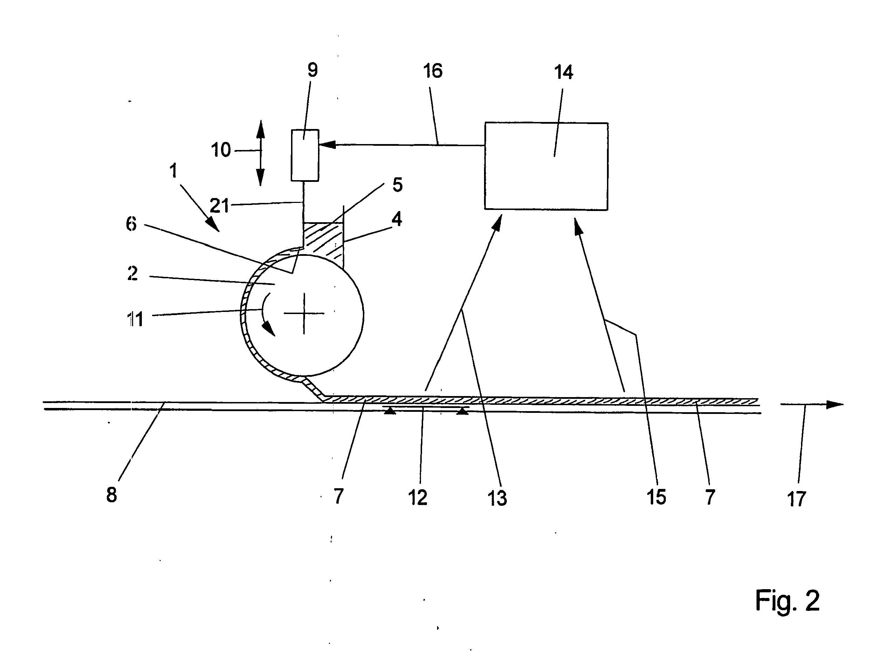

Die Ausführungsform der Vorrichtung gemäß Fig. 2 stimmt in weiten Bereichen mit der Ausführungsform der Fig. 1 überein, weshalb hierauf verwiesen werden kann. Lediglich der Strangformer 1 ist hier etwas anders ausgebildet. Er weist als wesentliche Bestandteile eine Walze 2 auf, der ein Wehr 21 zugeordnet ist. Das Wehr 21 bildet in Verbindung mit der Walze 2 den Austrittsspalt 6. Die Walze 2 wird gemäß Pfeil 11 hier linksdrehend angetrieben. Entsprechend ist der Trichter 4 der Walze 2 zugeordnet. Auch hier ist die Antrlebsgeschwindigkeit der Walze 2 veränderbar, so dass auf das Verhältnis der Bildungsgeschwindigkeit des Strangs im Bereich der Walze 2 sowie auf die Antriebsgeschwindigkeit des Transportbandes 8, insbesondere auf das Verhältnis von beiden, Einfluss genommen werden kann. Zu diesem Zweck ist die Regeleinrichtung 14 über nicht dargestellte Signalleitungen mit dem Antrieb der Walze 2 und/oder dem Antrieb des Transportbandes 8 verbunden.

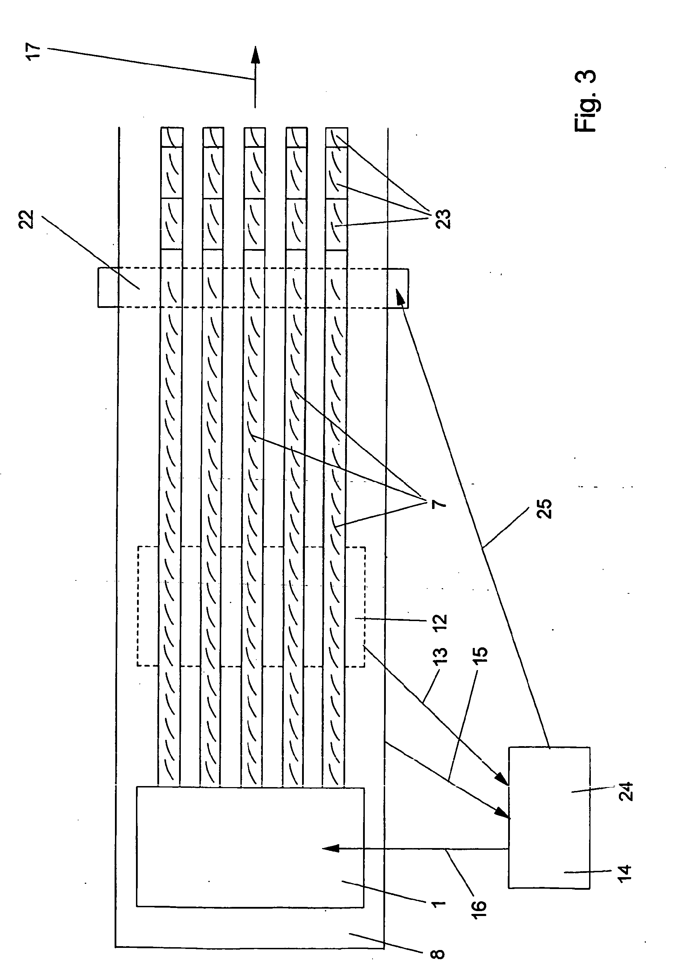

Fig. 3 zeigt eine schematisierte Draufsicht auf eine weitere Ausführungsform. Der Strangformer 1 kann hier beispielsweise in Form eines Extruders, einer Anlage mit Dosierpumpe, eines Falltrichters oder dergleichen ausgebildet sein. Er ist oberhalb des Transportbandes 8 angeordnet und erzeugt einen aus mehreren separaten Einzelsträngen bestehenden Strang 7 über die Arbeitsbreite der Vorrichtung. Oberhalb des Transportbandes 8, der Waage 12 nachgeordnet, ist ein Querschneider 22 vorgesehen, mit dessen Hilfe aus dem Strang 7 einzelne Produkte 23 in Stückform geschnitten werden. Es versteht sich, dass dieser Querschneider 22 auch bei den Vorrichtungen gemäß Fig. 1 und 2 vorgesehen ist. Dort ist zusätzlich noch ein Längsschneider erforderlich (nicht dargestellt). Bei der Ausführungsform gemäß Fig. 3 entfällt ein Längsschneider.

Fig. 3 zeigt auch die Regeleinrichtung 14, wie sie bei den Ausführungsformen der Fig. 1 und 2 Anwendung findet. Diese Regeleinrichtung 14 kann auch eine Steuereinrichtung 24 umfassen, mit deren Hilfe ein Steuersignal erzeugt wird, welches über eine elektrische Leitung 25 dem Querschneider 22 zugeführt wird. Es ist auch möglich, auf die Regeleinrichtung 14 zu verzichten, also von einem fest ausgebildeten oderfest einstellbaren Strangformer 1 auszugehen, das aktuelle ist-Gewicht des Strangs 7 auf dem Transportband mit Hilfe der Waage 12 zu ermitteln, einen Vergleich mit einem dem angestrebten Produktgewicht proportionalen Stranggewicht im Bereich der Steuereinrichtung 24 vorzunehmen und mit einem Abweichungssignal über die Leitung 25 den Querschneider 22 anzusteuern. Damit kann insbesondere die Taktrate zwischen aufeinander folgenden Querschnitten des Querschneiders 22 beeinflusst werden, wodurch sich die Länge der geschnittenen Produkte 23 geringfügig verändert. Solche Veränderungen zur Anpassung an ein genauer einhaltbares Soll-Gewicht der Produkte 23 sind durchaus verkraftbar, insbesondere von nachgeschalteten Verpackungsmaschinen für die Produkte 23. Es ist aber auch möglich, eine Kombination einer Regeleinrichtung 14 und einer Steuereinrichtung 24 zu nutzen, um das Soll-Gewicht der Produkte 23 in noch geringeren Grenzen einhalten zu können.

### BEZUGSZEICHENLISTE

- 1: Strangformer
- 2: Walze
- 3: Walze
- 4: Trichter
- 5: Masse
- 6: Austrittsspalt
- 7: Strang
- 8: Transportband
- 9: Stelleinrichtung
- 10: Doppelpfeil

- 11: Pfeil
- 12: Waage
- 13: Leitung
- 14: Regeleinrichtung
- 15: Leitung
- 16: Leitung
- 17: Pfeil
- 18: Kalibrierwalze
- 19: Kallbrierwalze
- 20: Querschnitt

- 21: Wehr
- 22: Querschneider
- 23: Produkt
- 24: Steuereinrichtung
- 25: Leitung

## Patentansprüche

1. Verfahren zur kontinuierlichen Herstellung eines Produkts aus essbarer Masse, insbesondere Süßwarenmasse, indem aus der Masse (5) ein Strang (7) mit festgelegtem Querschnitt geformt wird, der Strang (7) auf einem Transportband (8) abgelegt und abgefördert wird und der Strang (7) in einzelne Produkte (23) zumindest quergeschnitten wird, **dadurch gekennzeichnet, dass** der Strang (7) auf dem Transportband (8) während der liegenden Abförderung gewogen wird und abhängig von der Abweichung des ermittelten Ist-Flächen- oder Metergewichts des Strangs (7) von einem vorgegebenen Soll-Flächen-oder Metergewicht des Strangs (7) das Ist-Flächen- oder Metergewicht des Strangs (7) während der Strangbildung verändert wird.

2. Verfahren nach Anspruch 1, **dadurch gekennzeichnet, dass** das Ist-Flächen- oder Metergewicht des Strangs (7) durch Veränderung des Querschnitts bei der Strang bildung ausgeregelt wird.

3. Verfahren nach Anspruch 1 oder 2, **dadurch gekennzeichnet, dass** das Ist-Flächen-oder Metergewicht des Strangs (7) durch Veränderung des Verhältnisses der Bildungsgeschwindigkeit und der Abfördergeschwindigkeit des Strangs ausgeregelt wird.

4. Verfahren nach mindestens einem der Ansprüche 1 bis 3, **dadurch gekennzeichnet, dass** zusätzlich das Gewicht des Produkts durch Veränderung der Zeitspanne zwischen zwei aufeinanderfolgenden Querschnitten des Strangs (7) ausgesteuert wird.

5. Vorrichtung zur kontinuierlichen Herstellung eines Produkts aus essbarer Masse, insbesondere Süßwarenmasse, mit einem den Querschnitt der Masse (5) bestimmenden Strangformer (1), einem angetriebenen Transportband (8) zum Ablegen und Abfördern des von dem Strangformer (1) gebildeten Strangs (7) und zumindest einem Querschneider (22) zum Unterteilen des Strangs (7) in einzelne Produkte (23), insbesondere nach mindestens einem der Ansprüche 1 bis 4, **dadurch gekennzeichnet, dass** im Bereich des Transportbandes (8) oder eines Teils davon zwischen dem Strangformer (1) und dem Querschneider (22) eine Waage (12) zur Ermittlung des Ist-Flächen- oder Metergewicht des Strangs (7) vorgesehen ist und dass die Vorrichtung eine Einrichtung zur Veränderung des Ist-Flächen-oder Metergewicht des Strangs (7) bei der Strangbildung aufweist.

6. Vorrichtung nach Anspruch 5, **dadurch gekennzeichnet, dass** die Waage (12) als getaktete Bandwaage ausgebildet ist und dass die Einrichtung zur Veränderung des Ist-Flächen- oder Metergewicht des Strangs (7) und/oder des Produkts (23) als Regel- oder Steuereinrichtung (14, 24) ausgebildet ist, die Signale der Bandwaage empfängt, mit einem Soll-Flächen- oder Metergewicht vergleicht und der Abweichung entsprechende Signale an eine Stelleinrichtung (9) abgibt.

7. Vorrichtung nach mindestens einem der Ansprüche 5 oder 6, **dadurch gekennzeichnet, dass** der Strangformer (1) einen den Querschnitt des Strangs (7) bestimmenden Austrittsspalt (6) aufweist und die Einrichtung zur Veränderung des Ist-Flächen- oder Metergewicht des Strangs (7) als Stelleinrichtung (9) zur Veränderung des Austrittsspalts (6) ausgebildet ist.

8. Vorrichtung nach mindestens einem der Ansprüche 5 bis 7, **dadurch gekennzeichnet, dass** der Strangformer (1) eine Walze (2) und ein Wehr (21) oder eine weitere Walze (3) aufweist, die den Austrittsspalt (6) bilden.

9. Vorrichtung nach mindestens einem der Ansprüche 5 bis 8, **dadurch gekennzeichnet, dass** die Einrichtung zur Veränderung des Ist-Flächen- oder Metergewicht des Strangs (7) und/oder des Produkts (23) als Regel- oder Steuereinrichtung (14, 24) zur Veränderung der Bildungsgeschwindigkeit des Strangs (7), der Antriebsgeschwindigkeit des Transportbandes (8) und/oder der Taktrate des Querschneiders (22) ausgebildet ist.

10. Vorrichtung nach mindestens einem der Ansprüche 5 bis 9, **dadurch gekennzeichnet, dass** im Bereich des Transportbandes (8) eine dem Strangformer (1) nachgeordnete Kalibrierwale (18) für die Beeinflung des Querschnitts des Strangs (7) vorgesehen ist.

## Claims

1. A method of continuously producing a product of an edible mass, especially a confectionery mass, by forming a rope (7) from the mass (5), the rope (7) having a predetermined cross-section, the rope (7) being deposited on a conveyor belt (8) and being conveyed away and the rope (7) being cut into separate products (23) at least in a transverse direction, **characterised in that** the rope (7) is being weighted on the conveyor belt (8) while being conveyed away in the deposited position and the actual weight per area or weight per meter of the rope (7) is changed while the rope (7) is formed depending on the deviation of the determined actual weight per area or weight per meter of the rope (7) compared to a predetermined desired weight per area or weight per meter of the rope (7),

2. The method of claim 1, in that the actual weight per area or weight per meter of the rope (7) is controlled by changing the cross-section when the rope (7) is formed.

3. The method of claim 1 or 2, **characterised in that** the actual weight per area or weight per meter of the rope (7) is controlled by changing the ratio of the forming velocity and the conveying away velocity of the rope (7).

4. The method of at least one of claims 11 to 3, **characterised in that** in addition the weight of the product is controlled by changing the period of time between two following cross-sections of the rope (7),

5. Apparatus for continuously producing a product of an edible mass, especially a confectionery mass, including a rope forming element (1) determining the cross-section of the mass (5), a driven conveyor belt (8) for depositing and conveying away the rope (7) being formed by the rope forming element (1) and at least one transverse cutting element (22) for dividing the rope (7) into separate products (23), especially according to at least one of claims 1 to 4, **characterised in that** a scale (12) determining the actual weight per area or weight per meter of the rope (7) is provided in the region of the conveyor belt (8) or at least of a part thereof between the rope forming element (1) and the transverse cutting element (22) and that the apparatus includes a unit for changing the actual weight per area or weight per meter of the rope (7) while the rope (7) is formed.

6. The apparatus of claim 5, **characterised in that** the scale (12) is designed as a clocked belt weigher and that the unit for changing the actual weight per area or weight per meter of the rope (7) and/or of the product (23) is designed as a control unit (14, 24) receiving signals by the belt weigher, compares the signals to the desired weight per area or weight per meter and outputs signals corresponding to the deviation to a correcting unit (9).

7. The apparatus of at least one of claims 5 or 6, **characterised In that** the rope forming element (1) includes an exit gap (6) determining the cross-section of the rope (7) and the unit for changing the actual weight per area or weight per meter of the rope (7) is designed as correcting unit (9) for changing the exit gap (6).

8. The apparatus of at least one of claims 5 to 7, **characterised in that** the rope forming element (1) includes a roller (2) and a weir (21) or another roller (3) forming the exit gap (6).

9. The apparatus of at least one of claims 5 to 8, **characterised in that** the unit for changing the actual weight per area or weight per meter of the rope (7) end/or of the product (23) is designed as a control unit (14, 24) for changing the forming velocity of the rope (7), the velocity of the conveyor belt (8) and/or the clock rate of the transverse cutting element (22).

10. The apparatus of at least one of claims 5 to 9, characterise in that a calibrating roller (18) for influencing the cross-section of the rope (7) is arranged in the region of the conveyor belt (8) downstream of the rope forming element (1).

## Revendications

1. Procédé pour la fabrication en continue d'un produit à partir d'une substance comestible, en particulier une substance de confiserie, dans lequel, un brin (7) à section définie est formé à partir de la substance (5), le brin (7) est déposé et transporté sur une bande transporteuse (8) et le brin (7) est découpé au moins transversalement en produits (23) individuels, **caractérisé en ce que** le brin (7) sur la bande transporteuse (8) est pesé pendant son transport à plat et, en fonction de l'écart entre le poids réel au mètre carré ou au mètre du brin (7) et le poids de consigne prédéfini au mètre carré ou au mètre du brin (7), on fait varier le poids réel au mètre carré ou au mètre du brin (7) pendant la formation du brin.

2. Procédé selon la revendication 1, **caractérise en ce que** le poids réel au mètre carré ou au mètre du brin (7) est ajusté par la variation de la section pendant la formation du brin.

3. Procédé selon la revendication 1 ou 2, **caractérisé en ce que** le poids réel au mètre carré ou au mètre du brin (7) est ajusté par variation du rapport entre la vitesse de formation et la vitesse de transport du brin.

4. Procédé selon l'une quelconque des revendications 1 à 3, **caractérisé en ce que**, en plus, le poids du produit est réglé par la variation de l'intervalle de temps entre deux coupes transversales successives du brin (7).

5. Dispositif pour la fabrication continue d'un produit réalisé à partir d'une substance comestible, en particulier une substance de confiserie, comportant un dispositif de formage du brin (1) déterminant la section de la substance (5), une bande transporteuse (8) actionnée pour y déposer et transporter le brin (7) formé par le dispositif de formage du brin (1) et au moins un dispositif de coupe transversale (22) pour sectionner le brin (7) en produis (23) individuels, en particulier selon au moins l'une des revendications 1 à 4, **caractérisé en ce que** dans la zone de la bande transporteuse (8) ou d'une partie de celle-ci entre le dispositif de formage du brin (1) et le dispositif de coupe transversale (22), il est prévu une balance (12) destinée à déterminer le poids réel au mètre carré ou au mètre du brin (7), et **en ce que** le dispositif comporte une unité destinée à faire varier le poids réel au mètre carré ou au mètre du brin (7) pendant la formation du brin.

6. Dispositif selon la revendication 5, **caractérisé en ce que** la balance (12) est réalisé sous la forme d'une balance à courroie synchronisée et **en ce que** l'unité destinée à faire varier le poids réel au mètre carré ou au mètre du brin (7) et/ou du produit (23) est réalisée sous la forme d'une unité de commande (14, 24), qui reçoit des signaux de la balance à courroie, les compare avec un poids de consigne prédéfini au mètre carré ou au mètre et envoie à une unité de réglage (9) des signaux correspondants à la divergence.

7. Dispositif selon au moins l'une des revendications 5 ou 6. **caractérisé en ce que** le dispositif de formage du brin (1) comporte une fente de sortie (6) qui détermine la section du brin (7), et l'unité destinée à faire varier le poids réel au mètre carré ou au mètre du brin (7) est réalisée sous la forme d'une unité de réglage (9) destinée à faire varier la fente de sortie (6).

8. Dispositif selon au moins l'une des revendications 5 à 7, **caractérisé en ce que** le dispositif de formage du brin (1) comporte un cylindre (2) et un déversoir (21) ou un cylindre (3) supplémentaire, qui forment la fente de sortie (6).

9. Dispositif selon au moins l'une des revendications 5 à 8, **caractérisé en ce que** l'unité destinée à faire varier le poids réel au mètre carré ou au mètre du brin (7) et/ou du produit (23) est réalisée sous la forme d'une unité de réglage ou de commande (14, 24) destinée à faire varier la vitesse de formation du brin (7), la vitesse d'entraînement de la bande transporteuse (8) et/ou la vitesse de synchronisation du dispositif de coupe transversale (22)

10. Dispositif selon au moins l'une des revendications 5 à 9, **caractérisé en ce que** dans la zone de la bande transporteuse (8), il est prévu un cylindre de calibrage (18), monté en aval du dispositif de formage du brin (1) et destinée à influer sur la section du brin (7).
